# EUROPEAN PATENT APPLICATION

(11) **EP 3 241 917 A1**
(43) Date of publication of application: **08.11.2017**
(21) Application number: 15875783.1
(22) Date of filing: 01.12.2015
(51) Int. Cl.: C21D 6/00, G21D 1/04

(54) **METHOD FOR ANNEALING A NUCLEAR REACTOR CORE, AND A NUCLEAR REACTOR**

(30) Priority: 30.12.2014 RU 2014153831
(71) Applicant: Joint Stock Company "Akme-Engineering", Moscow 115035 (RU)
(72) Inventor: TOSHINSKY, Georgiy ll'ich, G. Obninsk 249033 (RU)
(74) Representative: Friese Goeden Patentanwälte PartGmbB
(86) International application number: PCT/RU2015/000838
(87) International publication number: WO 2016/108730

(57) **Abstract**

The field of this invention is nuclear power industry, and its implementation will result in the increased safety of nuclear reactor (NR) operation. The invention may be successfully introduced to liquid-metal-cooled (LMC) reactors, in particular, to fast-neutron nuclear reactors with heavy liquid metal coolant (HLMC), for example, eutectic alloy, lead and bismuth, lead.

The method implies estimation of the damaging dose of fast neutrons (dpa) which results in unacceptable degradation of paste-forming properties of steel. Then, upon achievement of the reactor energy yield, the direction of the coolant flow shall be changed from the standard direction to the reverse direction. Then an acceptable period of time is set for the annealing of reactor core elements, the temperature of the annealing mode is set and maintained by controlling the power level, it shall be sufficient to restore paste-forming properties of steel of the lower core section within the set period of time. At the end of the pre-set annealing period, the direction of the coolant flow shall be changed from reverse to the standard one. A nuclear reactor is also claimed which makes it possible to implement the proposed method.

## Description

### Technical Field

The field of this invention is nuclear power industry, in particular, processes used to restore paste forming properties of structural materials exposed to radiation, and its implementation will result in the increased safety of nuclear reactor (NR) operation. The invention may be successfully introduced to liquid-metal-cooled (LMC) reactors, in particular, to fast-neutron nuclear reactors with heavy liquid metal coolant (HLMC), for example, eutectic alloy, lead and bismuth, lead.

### Background of the Invention

Cores of these HLMC fast-neutron reactors (fuel element claddings, fuel rod grids) are made of corrosion-resistant ferritic martensitic steel (FMS) at the temperature up to 650 °C when exposed to HLMC. However, one of the well-known drawbacks of this steel is its tendency to low-temperature radiation embrittlement (LTRE) when exposed to a damaging dose of fast neutrons which exceeds 10 displacements per atom (dpa), while the damaging dose through the fuel cycle is approximately 100 dpa. Low-temperature radiation embrittlement effect occurs at the radiation temperature less than 350-380 °C and results in loss of paste-forming properties of steel which may cause a brittle failure of the product under minor deformation. Probability of these failures increases during refueling operations and fuel assembly rearrangement in the core, including its final defueling. Failures of fuel rod claddings, absorber rod claddings and lower end caps made of ferritic martensitic steel were observed during operation of the cores of ship reactors with a heavy liquid metal (lead and bismuth) coolant (HLMC).

Therefore, brittled steel of reactor structures may result in emergency shutdown of the nuclear reactors. A method of high-temperature annealing of radiation defects may be used in order to restore paste-forming properties of steel, which involves heating of ferritic martensitic steel products up to the temperature of approximately 500 °C for several hours.

A device intended for annealing of radiation-exposed cases of fuels assemblies (USSR invention certificate SU 1023817) is known, it consists of a case filled with a coolant, a perforated cover, a process chamber inside the case, and inlet and outlet tubes; the tubes are different, as the design of the process chamber includes vertical open-top channels interconnected on the top and on the bottom, and an electrical heater is installed in a channel, upon that, the inlet tube is located above the upper edge of the process chamber, and the outlet tube is located above the upper end of the heater. This technical solution allows to prevent annealing directly within nuclear reactors.

As the core coolant heating is approximately 150 °C under operating conditions, and the average HLMC temperature is approximately 500 °C, the lower section of the core is exposed to radiation embrittlement, as it flows past the "cold" coolant.

An isothermal high-temperature annealing method was proposed for annealing of cores of ship reactors with lead-and-bismuth HLMC prior to their unloading; this method is similar to the high-temperature hydrogen recovery (HTHR) method used for recovery of the surplus amount of lead monoxide by means of a hydrogen-and-gas mixture injected into the HLMC flow. This method was implemented with drained steam generators (SG) at the HLMC temperature pf 300-320 °C, which was the same that at the core inlet and outlet due to operation of recirculating pumps of the primary circuit and residual energy release of the core. (B.F. Gromov Sposob ochistki vnutrenney poverkhnosti stalnogo cirkulyacionnogo kontura s zhidkometallicheskim teplonositelem na osnove svintsa. [*Method of Treatment of the Steel Recirculating Circuit Inner Surface Filled with Lead-Based Liquid Metal Coolant*] International Invention Application No. PCT/RU96/00219 of 08/06/1996, A.G. Karabash "Khimiko-spectralny analiz i osnovy khimicheskoy tekhnologii zhidkometallicheskogo teplonositelya evtekticheskogo splava svinets-vismut". [Chemical Spectral Analysis and Engineering Chemistry Principles of Liquid Metal Coolant Based on Eutectic Lead-and-Bismuth Alloy], proceedings of the conference "Heavy Liquid Metal Coolants for Nuclear Technologies" (TZhMT-98), Volume 2, page 595, Obninsk, 1999, K.D. Ivanov, Yu.I. Orlov, P.N. Martynov. "Tekhnologiya svintsovo-vismutovogo teplonositelya na YaEU pervogo i vtorogo pokoleniya" [Lead-and-Bismuth Coolant Technology for NPP of the First and Second Generation], book of reports of the conference "Heavy Liquid Metal Coolants for Nuclear Technologies" (TZhMT-2003), Obninsk: Russian State Scientific Center: Institute of Physics and Power Engineering, 2003) Zero heat extraction by drained SG and high consumption of HLMC made it possible to secure isothermal temperature mode of the primary circuit at 300-320 °C. At the end of the HTHR mode, the system switched to the mode of extraction of residual power release: recirculating pumps of the primary circuit were shut down (or their speed was significantly reduced which resulted in reduction of the amount of energy transferred to the HLMC), and SGs were filled with condensed liquid produced by supplying steam to the secondary circuit from an external source with the pressure corresponding to the saturation temperature and exceeding the HLMC temperature. Low level of residual energy release was typical for operation mode of ship HLMC reactor and resulted in rapid drop of the HLMC temperature due to thermal losses of the primary circuit, as soon as recirculating pumps of the primary circus were stopped.

As it is impossible to shut down the unit for a long period of time in order to cool it down and to reduce energy release, implementation of this mode at a power NR with high installed capacity utilization factor (ICUF) and high level of residual energy release will make it difficult to transit again to the shutdown cooling mode at the end of the high-temperature radiation defect annealing method, as described above, and makes this mode potentially hazardous. This is related to the fact that transition to the isothermal mode at 500 °C with SG drained is a dynamical process, as it is driven by power of residual energy release exceeding thermal losses of the primary circuit, and it dictates transition to the shutdown cooling mode as soon as possible to prevent the core from overheating.

### Invention Disclosure

The purpose of this invention is to develop a core annealing method which is free from the drawbacks of well-known technical solutions of the area under consideration.

Implementation of this invention will lead to the following technical results, in particular:
- increased safety of high-temperature radiation defect annealing and restoration of paste-forming properties of steel, in particular, ferritic martensitic steel sections of reactor cores;
- possibility to anneal radiation defects at high temperature and to restore paste-forming properties of steel, in particular, ferritic martensitic steel sections of reactor cores, directly within the nuclear reactor;
- lower cost of high-temperature radiation defect annealing and restoration of paste-forming properties of steel, in particular, ferritic martensitic steel sections of reactor cores;
- mitigation of incident risks in the course of reactor refueling owing to better paste-forming properties of steel, in particular, those of ferritic martensitic steel items of NR cores prior to their refueling;
- possibility to restore paste-forming properties of steel sections of reactor cores and to anneal radiation defects at high temperature during operation time, other than refueling period, if required.

The following invention features contribute to achievement of the technical results listed above.

The proposed core annealing method is applied to, for example, LMC nuclear reactors which include a core, at least one steam generator (SG) and at least one electrically driven axial-flow recirculating pump of the primary circuit.

A nuclear reactor core annealing method is proposed. The method implies estimation of the damaging dose of fast neutrons (dpa) which results in unacceptable degradation of paste-forming properties of steel, in particular, ferritic martensitic steel. Then, as soon as corresponding energy yield of the reactor is achieved, it is required to change direction of coolant flow, for ex., LMC, to change the standard direction (bottom-upwards) to the reverse direction (top-downward). Upon that, the system transits to the annealing mode, as hot coolant at temperature 450 °C (minimum), for ex., LMC, flows through the lower section of the core which includes elements made of brittled steel. Then, an acceptable period of time for the annealing mode shall be set which is sufficient to anneal reactor core elements and to restore paste-forming properties of steel of the lower core section. Then, the temperature which is equal to or higher than the temperature required to restore paste-forming properties of steel of the lower core section within the pre-set period of time shall be set. Providing that the temperature is excessively high or low, durability shall be adjusted respectively and the temperature shall be reset. The pre-set temperature shall be maintained within the pre-set period of time by controlling the reactor power level and coolant consumption, if required. At the end of the pre-set annealing period the direction of the coolant flow shall be changed, for example, LMC, from the reverse direction (top-downward) to the standard one (bottom-upward).

The proposed design of LMC nuclear reactors includes a core, at least one steam generator (SG) and at least one electrically driven axial-flow recirculating pump of the primary circuit. Moreover, an electrical drive of the recirculating pump includes a power supply circuit which makes it possible to switch to the reverse direction of recirculating pump rotation and to control rotation frequency.

### Embodiment of invention

We propose a technical solution relating to high-temperature radiation defect annealing of engineering materials of the core in order to restore paste-forming properties of steel under environment of LMC and HLMC reactors (for ex., eutectic lead-and-bismuth alloy, lead), including corrosion-resistant ferritic martensitic steel (FMS) with temperature envelope up to 650 °C when exposed to LMC.

The proposed nuclear reactor core annealing method is applied to LMC nuclear reactors equipped with electrically driven axis-flow recirculating coolant pumps.

When in the non-isothermal mode and at relatively low power level, it is possible to change the direction of pump rotation by switching the electrical power supply circuit of the pump drive in order to anneal the reactor core at high temperature by means of axial-flow pumps. This changes the direction of coolant flowing through the core. In this case, "cold" coolant downstream the steam generator is supplied to the core outlet, hot coolant at temperature 450 °C flows through the lower section of the core with brittled steel elements. This results in restoration of paste-forming properties of steel. As it is not required to drain SG to run this high temperature annealing method, residual released energy will be removed at the end of the annealing mode and reactor shutdown. Therefore, this annealing mode will be safe. As hydraulic efficiency of the pump wet end decreases when the pump rotates in the reversed direction, coolant consumption at the same number of pump rotations (rotation frequency) also will be lower than that with the pump rotating in the right direction. This will support the annealing mode with relative power exceeding relative consumption, and will maintain coolant temperature 450 °C at the low core section at lower reactor power, i. e., under safer environment. This off-design mode will not reduce pump life, as it does not last long.

## Claims

1. The nuclear reactor core annealing method applied to a reactor consisting of, at least, a core, at least one steam generator, and at least one electrically-driven axial-flow recirculating pump of the primary circuit; it is **characterized in that** it estimates a value of the damaging dose of neutrons causing unacceptable degradation of paste-forming properties of steel; changes the direction of the coolant flow from the standard one (bottom-upwards) to the reverse one (top-downwards) at a corresponding value of the reactor energy yield; annealing of brittled steel elements of the lower core section with hot coolant starts, then an acceptable period of the annealing mode and temperature sufficient to restore paste-forming properties of steel of the lower core section within the pre-set time period are set; providing that the temperature is excessively high or low, the time period shall be set respectively and then the temperature shall be reset; then the reactor power shall be controlled to maintain the temperature within the pre-set time period, and, at the end of the annealing process, the annealing mode shall be terminated and the coolant direction shall be changed from the reversed one (top-downwards) to the standard one (bottom-upwards).

2. The method according to claim 1, wherein hot coolant flows through the lower core section at the temperature of 450 °C minimum.

3. The method according to claim 1, wherein it is required to control coolant consumption in the annealing mode in order to maintain the pre-set temperature within the pre-set period of time.

4. A LMC nuclear reactor consisting of a core, at least one steam generator, at least one electrically-driven axial-flow recirculating pump of the primary circuit which is equipped with a power supply circuit to change the rotation direction of the recirculating pump.

5. A feature of the reactor according to claim 4, **characterized in that** an electrically-driven recirculating pump equipped with a power supply circuit which makes it possible to control rotation frequency.
